(19) Europäisches Patentamt
European Patent Office
Office européen des brevets

(11) Veröffentlichungsnummer: **0 279 260 B1**

(12) **EUROPÄISCHE PATENTSCHRIFT**

(45) Veröffentlichungstag der Patentschrift: **21.10.92**

(51) Int. Cl.$^5$: **C08G 77/442**

(21) Anmeldenummer: **88101373.4**

(22) Anmeldetag: **01.02.88**

(54) **Teilchenförmige Mehrphasenpolymerisate.**

(30) Priorität: **14.02.87 DE 3704655**

(43) Veröffentlichungstag der Anmeldung:
**24.08.88 Patentblatt 88/34**

(45) Bekanntmachung des Hinweises auf die Patenterteilung:
**21.10.92 Patentblatt 92/43**

(84) Benannte Vertragsstaaten:
**BE DE FR GB IT NL**

(56) Entgegenhaltungen:
**EP-A- 0 012 971**
**WO-A-86/03208**

(73) Patentinhaber: **BAYER AG**

**W-5090 Leverkusen 1 Bayerwerk(DE)**

(72) Erfinder: **Damrath, Volker, Dr.**
**Dierath 26**
**W-5093 Burscheid(DE)**
Erfinder: **Lindner, Christian, Dr.**
**Riehler Strasse 200**
**W-5000 Köln 60(DE)**
Erfinder: **Kress, Hans-Jürgen, Dr.**
**Mobay Corporation Mobay Road**
**Pittsburgh, PA 15205(US)**
Erfinder: **Wittmann, Dieter, Dr.**
**Doerperhofstrasse 15**
**W-4150 Krefeld(DE)**

**EP 0 279 260 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft teilchenförmige emulgierte Mehrphasenpolymerisate mit Kern-Mantel-Struktur sowie ein Verfahren zu ihrer Herstellung. Das Polymerisat besteht aus einem organischen, harzartigen Polymer als Kern und einem Hüllenpolymerisat aus Organopolysiloxan.

Derartige Mehrphasenpolymerisate können als Überzugs- und Imprägnierungsmaterialien sowie ggf. als Kautschukrohstoffe Verwendung finden.

Organische harzartige Polymerisate aus mindestens einem olefinisch ungesättigten polymerisierbaren Monomeren zeigen in vielen Anwendungsbereichen unzureichende Eigenschaften. Nachteilig kann vor allem das ungenügende Hoch- und Tieftemperaturverhalten sein sowie die Neigung, bereits bei Raumtemperatur zu verspröden.

Organopolysiloxane zeichnen sich durch hohe Wärmebeständigkeit und Kältefestigkeit aus. Daneben sind sie korrosionsbeständig und wasserabweisend.

WO 86/03208 beschreibt Kern-/Mantel-Teilchen ,die durch Emulsionspolymerisation hergestellt werden, bei denen Kern und Mantel jeweils aus C-organischem Material bestehen und der Mantel zusätzlich Farbkörper enthalten kann.

EP-A 12 971 beschreibt Pfropfpolymerisate aus teilweise oder vollständig verseiften Vinylester-Homo- oder Copolymeren als Pfropfsubstraten und aufgepfropften Siloxaneinheiten.

Es wurde nun gefunden, daß man emulgierte teilchenförmige hoch-, teil- oder unvernetzte organische, harzartige Polymerisate derart mit Organopolysiloxanen umhüllen kann, daß es zur Ausbildung von Kern-Mantel-Teilchen kommt. Es wurde weiterhin gefunden, daß derartige Mehrphasenpolymerisate besonders gute Eigenschaften als Überzugs- und Imprägnierungsmaterialien aufweisen oder als Kautschukrohstoffe eingesetzt werden können.

Gegenstand der Erfindung sind teilchenförmige emulgierte Mehrphasenpolymerisate aus einem Kern (A), der ein organisches, harzartiges Polymerisat auf Basis olefinisch ungesättiger, polymerisierbarer Monomerer darstellt, und einer Hülle (B), die ein Homo- oder Mischpolymerisat von Organosiloxanen darstellt.

Das Gewichtsverhältnis des Kerns (A) zu der Hülle (B) beträgt 0,1 zu 99,9 bis 90 zu 10, bevorzugt, 10 zu 90 bis 50 zu 50. Die erfindungsgemäßen Mehrphasenpolymerisate haben mittlere Teilchendurchmesser ($d_{50}$) von 0,05 bis 10 $\mu$m, bevorzugt 0,1 bis 2 $\mu$m. Besonders bevorzugte Teilchendurchmesser sind 0,1 bis 1 $\mu$m.

Die Kerne (A), im Sinne der Erfindung aus organischem, harzartigem Polymerisat mit Erweichungstemperaturen (Glastemperaturen) über 30 °C, insbesondere über 60 °C, besonders über 90 °C, besitzen selbst mittlere Teilchengrößen ($d_{50}$) im Bereich von 0,05 bis 2 $\mu$m, insbesondere im Bereich von 0,09 bis 0,5 $\mu$m. Sie können bestehen aus unvernetztem Polymer, teilvernetztem Polymer oder hochvernetztem Polymer; bevorzugt sind Teilchen aus unvernetztem Polymer. Das Kernmaterial (A) stellt ein harzartiges Homo- oder Interpolymerisat aus wenigstens einem olefinisch ungesättigten polymersierbaren Monomeren dar, insbesondere aus der Reihe der Styrole, der $\alpha$-Methylstyrole, Acrylnitril, Methacrylnitril, Alkylmethacrylate, Maleinsäureimide, Vinylester von C1-6-Carbonsäuren, Olefine, insbesondere Ethylen, Vinylchlorid, Vinylidenchlorid, Acrylsäure, Methacrylsäure, Acrylamid; falls erforderlich, können die Polymeren auch geringere Mengen (bis zu 10 Gew.-%) Monomerer wie Butadien, Isopren, Alkylacrylat, Maleinsäureester eingebaut enthalten. Bevorzugt geeignete Kernmaterialien sind Copolymere auf der Basis von Styrol, $\alpha$-Methylstyrol, Methylmethacrylat, Acrylnitril, insbesondere Styrol-Acrylnitril-Copolymere, $\alpha$-Methylstyrol-Acrylnitril-Copolymere, Styrol-Methylmethacrylat-Copolymere sowie Polymethylmethacrylat.

Das Material der Hülle (B) ist ein Homo- oder Interpolymerisat von Organosiloxanen, die im wesentlichen aus Einheiten der allgemeinen Formel

$$R_nSiO_{\frac{4-n}{2}} \qquad (I)$$

aufgebaut sind, wobei R einen einwertigen organischen Rest darstellt und n einen Durchschnittswert von 1 bis weniger als 3 hat.

R kann ein einwertiger gesättigter Kohlenwasserstoffrest mit 1 - 18 C-Atomen sein, z. B. Methyl, Ethyl, Phenyl. Desweiteren kann R auch einen einwertigen radikalisch angreifbaren Kohlenwasserstoffrest darstellen, insbesondere z. B. Vinyl, Allyl, Chloralkyl, Mercaptoalkyl, Acryloxypropyl. Bevorzugt ist, daß mindestens 80 % aller Reste R Methylgruppen sind.

Ein weiterer Gegenstand der Erfindung ist ein Verfahren zur Herstellung der erfindungsgemäßen Mehrphasenpolymerisate.

In einer ersten Stufe wird eine Emulsion des Kernmaterials (A) hergestellt:
Die Herstellung erfolgt nach an sich bekannten Verfahren durch Emulsionspolymerisation wenigstens eines Monomeren, insbesondere durch wässrige, radikalischen Emulsionspolymerisationstechnologie. Bei diesem Verfahren werden Monomere in Gegenwart oberflächenaktiver Stoffe und gegebenenfalls Initiatoren in Emulsion polymerisiert. Durch Variation der Polymerisationsbedingungen lassen sich die Teilchengrößen der Polymerisate steuern und im gewünschten Sinne einstellen. Die Emulsionspolymersiationen werden normalerweise bei Temperaturen zwischen 30 - 100 °C durchgeführt. Bevorzugte Emulsionen, enthaltend die Kerne (A) im Sinne der Erfindung, besitzen einen pH-Wert kleiner 7 und werden mittels anionischer Emulgatoren, insbesondere auf der Basis von Salzen von Sulfonsäuren oder organischen Sulfaten hergestellt. Durch Einstellung von bestimmten Monomer/Emulgator/Wasser-Verhältnissen lassen sich die Teilchengrößen der anfallenden Latices steuern. Sind die Kerne im Sinne der Erfindung wenigstens teilvernetzt, so werden die den Kern bildenden Monomeren in Anwesenheit wenigstens eines polyfunktionellen Vinyl-oder Allylmonomeren polymerisiert, insbesondere in Mengen von bis zu 5 Gew.-% bezogen auf die Monomeren. Derartige vernetzende, polyfunktionelle Monomere sind weit bekannt, bevorzugt sind Divinylbenzol, Bis-acrylate, Bis-acrylamide, Acrylsäurevinylester, Triallylcyanurat, -isocyanurat, -phosphat, -citrat etc.

In der zweiten Stufe des erfindungsgemäßen Verfahrens wird in Gegenwart der Polymerisatemulsion der ersten Stufe das Organopolysiloxan für die Hülle (B) durch Emulsionspolymerisation hergestellt, indem man niedermolekulare Organosiloxane in dem Latex aus Stufe 1 dispergiert und (ggf. in Gegenwart einer zum Erhalt einer stabilen Emulsion benötigten Menge Emulgator sowie eines Katalysators) polymerisiert. Dabei ist eine der Polymerisation vorausgehende Emulgierung der grob dispergierten Organosiloxane mit technischen Hilfsmitteln wie z. B. schnellaufenden Rührwerken (ULTRA-TURRAY®, Fa. Jahnke & Kunkel, Staufen) Kolloidmühlen oder Hochdruckhomogenisatoren nicht erforderlich. Vielmehr ist bevorzugt, daß Emulgierung und Polymerisation gleichzeitig erfolgen. Dadurch wird überraschenderweise erreicht, daß das gebildete Organopolysiloxan erfindungsgemäß auf das in der ersten Stufe hergestellte Kernmaterial (A) aufpolymerisiert.

Zur Erhöhung der Polymerisationsgeschwindigkeit kann die Reaktionstemperatur auf etwa 40 bis 100 °C angehoben werden.

Die Teilchengrößen der erfindungsgemäßen Mehrphasenpolymerisate lassen sich durch Variation der Polymerisationsbedingungen steuern und in gewünschtem Sinne einstellen. Durch Verwendung nichtionischer Coemulgatoren und Einstellung bestimmter Emulgator/Organosiloxan-Verhältnisse sowie durch die Wahl von Kernmaterialien mit geeigneten Teilchendurchmessern lassen sich die Teilchengrößen der Mehrphasenpolymerisate besonders gut steuern.

Nach beendeter Polymerisation kann das teilchenförmige Mehrphasenpolymerisat durch Brechen der Emulsion auf beliebige Weise, z. B. durch Zugabe von Salzen wie Natriumchlorid, durch Verdampfen des Wassers oder durch Zugabe wasserlöslicher Alkohole, wie Methanol, Äthanol oder Isopropanol in modifizierter Form erhalten werden. Erfolgt das Brechen der Emulsion durch Zugabe von Salzen oder von Alkohol, erhält man das Mehrphasenpolymerisat praktisch katalysatorfrei. Das Mehrphasenpolymerisat kann aber auch in Emulsion weiterverarbeitet werden.

Als siliciumorganische Ausgangsverbindungen kann man die aus dem Stand der Technik bekannten Verbindungen einsetzen. Hierzu gehören u. a. cyclische Organosiloxanoligomere, wie z. B. Octamethylcyclotetrasiloxan oder Decamethylcyclopentasiloxan. Daneben sind Alkoxysilane oder Alkoxysiloxane geeignet, wobei die Alkoxygruppe 1-4 Kohlenstoffatome enthalten soll. Beispiele geeigneter Alkoxysilane sind Methyltriethoxysilan, 3-Aminopropyltrimethoxysilan und 3-Mercaptopropylmethyldimethoxysilan.

Für das erfindungsgemäße Verfahren sind ferner Polysiloxanole, insbesondere $\alpha,\omega$-Polysiloxandiole, eines Molekulargewichtes von etwa 2000 bis 5000 und einer Viskosität von 50 bis 150 mPa•s bei 25 °C geeignet.

Das Organopolysiloxan der Hülle (B) kann teilweise vernetzt sein. Der Einbau von Verzweigungen oder Vernetzungen kann durch Zugabe von z. B. Tetraethoxysilan oder eines Silans der allgemeinen Formel

$RSiX_3$ (II),

wobei X eine hydrolysierbare Gruppe, insbesondere den Alkoxyrest darstellt, erfolgen. R hat die im vorhergehenden beschriebene Bedeutung. Bevorzugt sind R = Methyl und R = Phenyl. Eine Vernetzung kann jedoch auch stattfinden, wenn z. B. gleichzeitig eingesetzte Vinyl- und Mercaptogruppen bei der Emulsionspolymerisation der Siloxanbestandteile miteinander reagieren, so daß die Zugabe eines externen Vernetzers nicht erforderlich ist. Die Organopolysiloxane der Hülle (B) können auch zusätzlich anorganische Füllstoffe enthalten, wie z. B. $SiO_2$, Talkum und dergleichen.

Als Emulgatoren werden die aus dem Stand der Technik bekannten nichtionogenen und/oder anionenaktiven Emulgatoren verwendet.

Beispiele für nichtionogene Emulgatoren sind Anlagerungsprodukte von Ethyloxid an Verbindungen mit azidem Wasserstoff, wie Fettalkohole, Fettsäuren und dergleichen. Der HLB-Wert der Emulgatoren ist so auszuwählen, daß er in dem Bereich liegt, in dem die Bildung von O/W-Emulsionen begünstigt ist. Im allgemeinen werden Emulgatoren eines HLB-Wertes ≧ 10 verwendet. Geeignete

nichtionogene Emulgiermittel sind z. B. POE (3)-Laurylalkohol, POE (20)-Oleylalkohol, POE (7)-Nonylphenol oder POE (10)-Stearat. Die Schreibweise POE (3)-Laurylalkohol bedeutet, daß an ein Molekül Laurylalkohol 3 Einheiten Ethylenoxid angelagert sind, wobei die Zahl 3 einen Mittelwert darstellt.

Als anionenaktive Emulgatoren können die Alkalisalze von Fettsäuren oder die Alkali-, Erdalkali- oder Aminsalze von organischen Sulfonsäuren, insbesondere Alkylarylsulfonsäuren, verwendet werden. Beispiele hierfür sind das Natriumsalz der Dodecylbenzolsulfonsäure oder der Laurylsulfonsäure. Es ist natürlich auch möglich, Mischungen von nichtionogenen Emulgatoren mit anionenaktiven Emulgatoren zu verwenden.

Als Katalysatoren werden in Übereinstimmung mit dem Stand der Technik Säuren verwendet. Insbesondere sind solche Säuren geeignet, die grenzflächenaktiv sind. Beispiele solcher Katalysatoren sind Sulfonsäuren wie die Alkylsulfonsäuren oder Alkylarylsulfonsäuren, z. B. Dodecylbenzolsulfonsäure. Wenn auchs grundsätzlich alle aus dem Stand der Technik bekannten Säuren als Katalysator verwendet werden können, sind die grenzflächenaktiven Säuren bevorzugt.

Bei der Polymerisation der Hülle (B) muß die Bildung neuer Teilchen möglichst vollständig verhindert werden. Der Emulsionsstabilisator muß in einer zur Oberflächenbedeckung der Teilchen erforderlichen Menge vorhanden sein. Die Größe der Teilchen ist durch die Reaktionsführung in weiten Grenzen zu variieren. Verwendet man als Kern A) einen agglomerierten Latex, um große Teilchen zu erhalten, so können diese mehrere Harz-Partikel enthalten. Man kann die Polymerisation der Hülle (B) auch so führen, daß Partikel mit Kern-Mantel Struktur und gleichzeitig Partikel aus reinem Organopolysiloxan erzeugt werden. Auch solche Mischungen können unter besonderen Umständen Verwendung finden.

Die erfindungsgemäßen teilchenförmigen Mehrphasenpolymerisate können Überzugs- und Imprägnierungsmaterialien sowie als Kautschukrohstoffe verwendet werden.

Sie eignen sich ebenso zur Herstellung von Latexfarben. Die Emulsion kann z. B. Mit Pigmenten oder/und anderen Füllstoffen vermischt und auf Oberflächen aufgetragen werden, auf denen nach Verdampfen des Wassers ein zusammenhängender Film zurückbleibt.

Die erfindungsgemäßen Mehrphasenpolymerisate zeichnen sich durch eine überraschend gute Kombonation technisch relevanter Kunststoffeigenschaften aus und lassen damit einen Einsatz anstelle von reinem Organopolysiloxan zu. Als solche Eigenschaften sind zu nennen: Alterungs- und Thermostabilität, Tieftemperaturzähigkeit, Oxidations- und Korrosionsbeständigkeit und Kautschukeigenschaften wie Festigkeit, Zug-Dehungsverhalten sowie besonders vorteilhafte Verarbeitbarkeit.

Der Gegenstand der vorliegenden Erfindung soll anhand der folgenden Beispiele noch näher erläutert werden (die Angabe von Teilen und Prozenten bezieht sich, soweit nicht anders angegeben auf das Gewicht).

## Beispiele

### 1. Herstellung der Kernmaterialien

1.1 In einem Reaktor werden 3000 Tl. Wasser und 7,5 Tl. Na-Salz von $C_{14\text{-}18}$-Alkylsulfonsäuren vorgelegt. Nach Aufheizen unter Rühren auf 63-65 °C werden 240 Tl. einer Mischung aus Styrol und Acrylnitril im Gew.-Verhältnis 28 % Acrylnitril und 72 % Styrol in den Reaktor eingespeist. Nach Initiierung mittels einer Lösung von 15 Tl. Kaliumperoxodisulfat in 150 Tl. Wasser werden innerhalb von 4 Stunden folgende Lösungen in den Reaktor eingespeist:

| | |
|---|---|
| Lösung 1: | 788 Tl. Acrylnitril |
| | 2025 Tl. Styrol |
| | 12 Tl. tert.-Dodecylmercaptan |
| Lösung 2: | 2100 Tl. Wasser |
| | 33 Tl. Na-Salz von $C_{14\text{-}18}$-Alkylsulfonsäuren |

Danach wird bei 65 °C auspolymerisiert, bis der Latex einen Feststoffgehalt größer 36,5 % aufweist. Der resultierende Latex besitzt einen pH-Wert von 3,57 und eine mittlere Teilchengröße ($d_{50}$-Wert) von 0,12 µm.

1.2 In einem Reaktor werden 3000 Tl. Wasser und-8 Gew.-Tl. Na-Salz von $C_{14-18}$-Alkylsulfonsäuren vorgelegt. Nach Aufheizen auf 65-67 °C werden 240 g Methylmethacrylat in den Reaktor eingegeben. Nach Initiierung mittels einer Lösung von 10 Gew.-Tl. Kaliumperoxodisulfat in 150 Gew.-Tl. Wasser werden innerhalb von 4 Stunden folgende Lösungen in den Reaktor eindosiert:

| | |
|---|---|
| Lösung 1: | 2025 Tl. Methylmethacrylat |
| | 11 Tl. tert.-Dodecylmercaptan |
| Lösung 2: | 2100 Tl. Wasser |
| | 30 Tl. Na-Salz von $C_{14-18}$-Alkylsulfonsäuren |

Danach wird bei 65 °C auspolymerisiert, bis der Latex einen Feststoffgehalt größer 36,5 % aufweist. Der resultierende Latex besitzt einen pH-Wert von 4 und eine mittlere Teilchengröße ($d_{50}$-Wert) von 0,15 µm.

### 2. Herstellung der erfindungsgemäßen Mehrphasenpolymerisate

2.1 In einem Reaktor werden unter Stickstoff-

Atmosphäre vorgelegt:
150 Teile der Harzemulsion (1.1)
5,0 Teile Octamethylcyclotetrasiloxan
Die Reaktionsmischung wird auf 85° C erwärmt und 2h gerührt.

Nach der Zugabe einer Lösung von 1,3 Teilen Dodecylbenzolsulfonsäure in 139 Teilen Wasser wird 1h bei 85° C nachgerührt, anschließend werden 95 Teilen Octamethylcyclotetrasiloxan innerhalb von 2 Stunden eindosiert.

In dem zunächst zweiphasigen Reaktonsgemisch wird unter Rühren und Beibehaltung der Reaktionstemperatur die Polymerisation innerhalb von 24 Stunden zu Ende geführt. Die dabei gebildete stabile Emulsion wird auf Raumtemperatur abgekühlt. Sie enthält das Mehrphasenpolymerisat in einer Konzentration von 36,7 % (bestimmt nach DIN 53 216). Die Teilchengröße betragt 0,16 µm (bestimmt mit Laser-Streulicht-Spektroskopie), die Teilchengrößenverteilung ist monomodal (k 2 = 0,07). Das Polymerisat besitzt einen Gelgehalt von 2,0 %, gemessen in Tetrahydrofuran, und besteht aus 34 % Styrol-Acrylnitril-Copolymer und 66 % Organopolysiloxan. Aus der Emulsion läßt sich durch Verdampfen des Wassers ein klebfreier, weicher Film bilden, der auf Glas eine ausgezeichnete Haftung besitzt.

2.2 In einem Reaktor werden unter Stickstoffatmosphäre vorgelegt:
150 Teile der Harzemulsion (1.1)
5,0 Teile Octamethylcylcotetrasiloxan
Die Reaktionsmischung wird auf 85° C erwärmt und 2h gerührt.

Nach Zugabe einer Lösung von 1,4 Teilen Dodecylbenzolsulfonsäure, 1,4 Teilen (POE(5)-Laurylalkohol und 1,4 Teilen $C_{12-14}$-Alkylsulfonsäure-Natriumsalz in 58 Teilen Wasser wird eine Stunde bei 85° C nachgerührt. Anschließend wird eine Mischung aus 95 Teilen Octamethylcyclotetrasiloxan, 2,5 Teilen Mercaptopropylmethyldimethoxysilan und 3,1 Teilen Tetramethyltetravinylcyclotetrasiloxan innerhalb von 2 Stunden eindosiert, die Polymerisation wird wie im Beispiel 2.1 zu Ende geführt und die gebildete stabile Emulsion auf Raumtemperatur abgekühlt. Sie enthält das Mehrphasenpolymerisat in einer Konzentration von 48,7 %. Die Teilchengröße beträgt 0,18 µm, die Teilchengrößenverteilung ist monomodal (k 2 = 0,02). Das Polymerisat ist teilvernetzt, der Gelgehalt beträgt 58,2 %. Es besteht aus 35 % Styrol-Acrylnitril-Copolymer und 65 % Organopolysiloxan. Aus der Emulsion läßt sich durch Eintrocknen ein klebfreier dehnbarer Film bilden, der eine ausgezeichente Glashaftung besitzt.

## Patentansprüche

1. Teilchenförmige emulgierte Mehrphasenpolymerisate, bestehend aus einem Kern (A) aus organischem, harzartigem Polymerisat auf Basis olefinisch ungesättigter Monomerer mit Erweichungstemperaturen (Glastemperaturen) über 30° C und einem Hüllenpolymerisat (B) aus Organopolysiloxan.

2. Teilchenförmige Mehrphasenpolymerisate nach Anspruch 1), in denen das Gewichtsverhältnis von (A) zu (B) 0,1 zu 99,9 bis 90 zu 10 beträgt.

3. Teilchenförmige Mehrphasenpolymerisate nach Anspruch 1) oder 2) dadurch gekennzeichnet, daß sie mittlere Teilchendurchmesser von 0,05 bis 10 µm ($d_{50}$-Werte) besitzen.

4. Teilchenförmige Mehrphasenpolymerisate nach einem der Ansprüche 1) bis 3), dadurch gekennzeichnet, daß die Kerne (A) eine mittlere Größe von 0,05 bis 2 µm ($d_{50}$-Werte) aufweisen.

5. Verfahren zur Herstellung teilchenförmiger Mehrphasenpolymerisate, gemäß der Ansprüche 1) - 4), dadurch gekennzeichnet, daß man in einer ersten Stufe durch Emulsionspolymerisation ein organisches, harzartiges Polymerisat in Latexform herstellt und danach in einer zweiten Stufe die Harzteilchen mit einer Hülle (B) aus Organopolysiloxan umgibt, indem man niedermolekulare Organosiloxane in Anwesenheit der Latexteilchen der ersten Stufe in Emulsion polymerisiert.

## Claims

1. Particulate emulsified multiphase polymers consisting of a core (A) of organic resin-like polymer based on olefinically unsaturated monomers having softening temperatures (glass temperatures) above 30° C and a shell polymer (B) of organopolysiloxane.

2. Particulate multiphase polymers as claimed in claim 1, in which the ratio by weight of (A) to (B) is 0.1:99.9 to 90:10.

3. Particulate multiphase polymers as claimed in claim 1 or 2, characterized in that they have average particle diameters of 0.05 to 10 µm ($d_{50}$ values).

4. Particulate multiphase polymers as claimed in any of claims 1 to 3, characterized in that the cores (A) have an average diameter of 0.05 to

2 µm ($d_{50}$ values).

**5.** A process for the production of the particulate multiphase polymers claimed in any of claims 1 to 4, characterized in that, in a first stage, an organic resin-like polymer is produced in latex form by emulsion polymerization and, in a second stage, the resin particles are surrounded with a shell (B) of organopolysiloxane by emulsion polymerization of low molecular weight organosiloxanes in the presence of the latex particles of the first stage.

**Revendications**

**1.** Polymères à phases multiples émulsifiés en forme de particules, constitués d'un noyau (A) formé d'un polymère résineux organique à base de monomères à insaturation oléfinique avec des températures de ramollissement (températures de transition vitreuse) supérieures à 30°C et d'un polymère d'enveloppe (B) formé d'un polysiloxane organique.

**2.** Polymères à phases multiples en forme de particules selon la revendication 1, dans lesquels le rapport pondéral de (A) à (B) est compris dans l'intervalle de 0,1/99,9 à 90/10.

**3.** Polymères à phases multiples en forme de particules selon la revendication 1 ou 2, caractérisés en ce que la granulométrie moyenne est comprise entre 0,05 et 10 µm (valeur $d_{50}$).

**4.** Polymères à phases multiples en forme de particules selon l'une des revendications 1 à 3, caractérisés en ce que les noyaux (A) présentent une granulométrie moyenne de 0,05 à 2 µm (valeur $d_{50}$).

**5.** Procédé de préparation de polymères à phases multiples en forme de particules selon les revendications 1 à 4, caractérisé en ce qu'on prépare par polymérisation en émulsion un polymère résineux organique au cours d'une première étape sous forme d'un latex et qu'on entoure ensuite, au cours d'une deuxième étape, les particules de résine au moyen d'une enveloppe (B) de polysiloxane organique en polymérisant en émulsion des siloxanes organiques à faible poids moléculaire en présence des particules de latex provenant de la première étape.